# EUROPEAN PATENT SPECIFICATION

(11) **EP 2 447 445 B1**
(45) Date of publication and mention of the grant of the patent: **14.06.2017**
(21) Application number: 11184102.9
(22) Date of filing: 06.10.2011
(51) Int. Cl.: G01N 3/08, E04G 21/32, A62B 35/04, A62B 35/00, G01M 5/00

(54) **A method for performing a static test on a safety line**
Verfahren zum Ausführen eines statischen Test einer Sicherheitsleine
Méthode pour effectuer un test static d'une ligne de vie

(30) Priority: 27.10.2010 IT BS20100172
(43) Date of publication of application: 02.05.2012
(73) Proprietor: SI.AL. S.R.L., 25030 Brandico (BS) (IT)
(72) Inventor: Gandellinini, Alberto, 25062 CONCESIO (BRESCIA) (IT)
(74) Representative: Tirloni, Bartolomeo

(56) References cited:
- EP-A1- 2 213 810
- WO-A1-03/047700
- GB-A- 2 389 386

## Description

The present invention relates to a method of performing a static test on a safety line.

Safety lines are known, of the type shown in document WO2008/081375 for example, that are designed to be mounted on fixed structures typically placed to a given height from the ground, such as building roofs, walls or beams, as the safety system for operators working at this height from the ground. These safety lines in case of loss of balance by the operator and downwards slip, prevent the operator's impact against underlying structures or the ground, or at all events reduce the impact's violence.

Safety lines are known which comprise two stiff supporting devices or stakes fastened at mutually spaced positions, typically to a roof of a building structure, such as a house, a cottage, a shed or the like. A connecting cable, preferably of steel, is fastened between the supporting devices, to which cable the operator can be hooked by a device for protection against falls from a higher place (such as slings, safety cables, hooking ropes, retaining ropes, winding elements, snap-hooks or similar safety equipment), so that the operator can move along the cable between the supporting stakes. In this manner the operator can move safely on the building structure, during manufacture of the roof or covering for example, as well as for accomplishment of technical plants, gutters, flues or skylights, and for the related repair and maintenance operations.

Also known are supporting devices for safety lines fastened to building covering elements and consisting of a metal plate steadily secured to the covering element and provided with a portion (a ring, for example) typically welded to the plate, projecting from the plate itself for fastening of the connection cable of the safety line.

However, since these devices are substantially stiff, they have a drawback. Actually, when the operator constrained to the safety line accidentally loses his/her balance and falls from a higher place, the fall is stopped by the safety cable in a substantially instantaneous manner. However the kinetic energy stored during the fall is discharged onto the supporting device in an impulsive manner, typically in the form of a tensile stress. This stress can involve breaking of the device or separation of same from the bearing structure to which it is fastened (as a consequence of failure of the mechanical anchoring system carrying out fixing). In addition, this stress can be discharged in an impulsive manner on the operator, thus bringing about possible consequences on his/her physical integrity.

To obviate this drawback, in known safety lines a shock-absorbing member is interposed in series between the connection cable and at least one supporting device, which member is designed to absorb the aforesaid stress by means of an element submitted to elastic or inelastic deformation.

Also known are supporting devices for safety lines capable of being deformed in case of fall of the operator, to mitigate the jerks he/she receives. These devices consist for example of a stake that is such positioned that its longitudinal extension is orthogonal to the building structure and is able to deform when submitted to the force resulting from the operator's fall, typically by bending towards the pulling direction of the connection cable.

EP2213810 discloses a method of execution of a static test using a tension indicator. GB2389386 and WO03/047700 show a supporting device for safety line having a deformable element.

The Applicant has found that present supporting devices for safety lines have drawbacks and are susceptible of improvements under different points of view.

In particular, the Applicant has found that known deformable supports for safety lines are characterised by a complicated structure and/or high bulkiness and/or weight, and/or by complexity in manufacture and/or installation, and by high manufacturing costs.

The Applicant has also found that known deformable devices are not able to effectively mitigate the impulsive stresses in case of fall.

The Applicant has further found that known methods for carrying out acceptance tests during installation have drawbacks too. As known, the safety lines once installed on a building structure have to be submitted to acceptance tests (for example, a static test consisting in applying, over a period of time, a constant force greater than 2 kN, typically of 5 kN) in order to be sure that the safety line is sufficiently strong and the installation has been carried out correctly. However, the acceptance tests cannot be carried out on known deformable devices because they can determine a permanent deformation of the devices that would impair the mechanical behaviour in case of stresses.

In addition it is the Applicant's opinion that known permanently deformable devices are not able to be submitted to acceptance tests in an easy manner during installation.

Under this situation, the aim underlying the present invention, in its different aspects and/or embodiments, is to make available a method of performing a static test, which is capable of obviating one or more of the aforesaid drawbacks.

It is a further aim of the present invention to use a support for safety lines that is strong enough to support a safety line under any operating condition, i.e. that is capable of remaining fastened to the building structure following an impulsive stress resulting from the fall of an operator hooked to the safety line, bearing the stretch typical of the connecting cable, withstanding fatigue cycles due to thermal expansion of the safety line and keeping the mechanical features unchanged over time.

Another aim of the present invention is to provide a supporting device that is adapted to be easily submitted to a static test.

A further aim of the invention is to provide a method of performing a static test on a safety line that does not give rise to permanent deformation in the supporting devices and is of simple and easy accomplishment.

One or more of the above aims, and other possible aims that will become more apparent in the course of the following description are substantially achieved by a method of performing a static test on a safety line, having the technical features contained in one or more of the appended claims. The invention relates to a method of performing a static test on a safety line, according to claim 1. The method advantageously enables static tests to be performed on safety lines in an easy, quick and inexpensive manner. In addition, this method does not damage the components of the safety line.

In an aspect, in step c) said determined tensile force is greater than or equal to 4kN, preferably greater than or equal to 5kN (in some cases it can reach 10 kN) and said determined period of time is greater than 1 minute, preferably greater than or equal to 2 minutes, more preferably greater than or equal to 3 minutes.

In an aspect in said step a) the first supporting device or both of them are in accordance with the supporting device according to one or more of the following aspects.

In an aspect the supporting device for safety lines comprises:
- a main body having a substantially plate-like conformation and intended to be stiffly fixed to a building structure, and
- an anchoring body having a substantially plate-like conformation and provided with a constrained end integrally fixed to the main body and a free end opposite to said constrained end, wherein the plan area of the main body is greater than the plan area of the anchoring body, wherein the anchoring body has a series of folding lines interposed between said free end and constrained end, each pair of adjacent folding lines delimiting a respective sub-portion of the anchoring
   body so as to define a series of sub-portions each lying in a plane oblique with respect to the lying plane of the adjacent sub-portions;
wherein said anchoring body is structured for deforming at least in correspondence with said folding lines, due to a tensile force applied to said free end so that the free end changes its position with respect to the constrained end.

It is the Applicant's opinion that the combination of the aforesaid technical features, in particular the presence of the series of folding lines at which the anchoring body deforms due to a tensile stress applied to the free end, in such a manner that the free end modifies its position relative to the constrained end, allows a supporting device for safety lines to be obtained that is able to effectively damp the jerk in case of fall of an operator and to absorb the stress resulting from said fall (preventing this stress from being discharged onto the fastening elements for connection to the building structure and the covering) and at the same time is characterised by a simple and functional construction of easy and cheap manufacture.

The Applicant also thinks that the technical feature according to which the plan area of the main body is greater than the plan area of the anchoring body advantageously allows a supporting device to be obtained that is capable of ensuring wide and distributed fastening to the building structure, strong enough to withstand the stresses typical of a safety line.

In addition, since the device is made up of a plate-like main body and a plate-like anchoring body, the height of same can be limited relative to the building structure to which it is fixed, by limiting the lever arm of the tensile force on the device. The plate-like conformation of the main body ensures steady, safe and easy fastening onto building structures already provided with a covering element (a roof, for example). Moreover, the device made up of plate-like bodies can be obtained in a simple and cheap manner, by carrying out cuts in a plate-like piece for example, for shaping the main body and anchoring body obtained from such a piece.

The Applicant thinks that the presence of folding lines in the anchoring body (as far as the Applicant knows, this expedient has never been used), which lines are of simple structure and can be easily integrated into a plate-like structure (for example, they can be obtained by simple folding of a sheet metal portion), makes it possible to obtain a plate-like device having the desired mechanical behaviour, coming to this result in an inexpensive manner.

In an aspect, said deformation of the anchoring body remains elastic at least up to a value of said tensile force less than or equal to 2 kN, preferably less than or equal to 2.5 kN. In this manner, the device effectively absorbs the small stresses resulting from normal use of the safety line (and/or from thermal cycles) without impairing the potential capacities of stress absorption in case of fall.

In an aspect said deformation becomes plastic at a value of said tensile force greater than 2 kN, preferably greater than 3 kN, more preferably greater than 4 kN. In this manner, the device effectively absorbs the impulsive stresses due to the operator's fall. By plastic deformation it is intended an inelastic deformation.

According to the Applicant, the anchoring body, folded down along the folding lines in a series of sub-portions, constitutes an element having a predetermined plastic compliance and capable of limiting or eliminating the impulsive character of a stress resulting from a fall. The Applicant has ascertained, through functional tests, that the energy generated in the fall is spent for plastically deforming the anchoring body, reducing the maximum load that the device has to bear and therefore enabling said device to be under-sized relative to known devices and the material used to be reduced, typically limiting the thickness of the main and anchoring bodies, the members for fastening the main body to the building structure being under-sized too.

In an aspect said anchoring body is structured for deforming, by effect of said tensile force greater than 2 kN, by stress relieving or plastic extension of the sub-portions that will tend to bring the anchoring body to a flat configuration, such plastic extension producing elongation of the anchoring body and causing the free end to move apart from the constrained end in the direction of application of the tensile stress.

In an aspect, said free end is designed to be constrained to a connection cable of a safety line.

In an aspect, said series of folding lines comprises an odd number of folding lines, preferably at least five, more preferably at least seven, most preferably at least nine.

In an aspect, the series of sub-portions defines a series of angles between each pair of adjacent sub-portions. Preferably, each of said angles is on a face of the anchoring body opposite to the face on which the adjacent angles are.

In an aspect, the anchoring body is folded in such a manner that the series of sub-portions has a "sawtooth" conformation, for instance the even sub-portions lie in mutually-parallel respective planes and the odd sub-portions lie in mutually parallel respective planes. In an alternative aspect, the anchoring body is folded in such a manner that the series of sub-portions has a square or almost sinusoidal wave conformation. However, the present invention includes every embodiment of the anchoring body in which each sub-portion is oriented according to any angle with respect to the preceding sub-portion.

In an aspect, the angle formed between two adjacent sub-portions is constant.

In an aspect, the angle formed between at least two adjacent sub-portions (preferably between all adjacent sub-portions) is less than or equal to 135°, preferably less than or equal to 110°, most preferably of 90°. The Applicant has ascertained that said selection of the angle gives the anchoring body the desired capacity of absorbing the force generated by the tensile force before coming to a full plastic extension of the sub-portions corresponding to a flat configuration.

In an aspect, said series of sub-portions comprises a first sub-portion, comprised between the first and the second folding lines, and a last sub-portion, comprised between the penultimate and the last folding line. In an aspect, the first folding line is coincident with said constrained end.

In an aspect, the free end of the anchoring body has an end edge. In an aspect, the end edge is substantially flush with the main body, in particular coplanar with the first folding line.

In an aspect, the main body identifies two half-spaces that are opposite thereto and both comprising the main body itself, and the anchoring body extends in one alone of said half-spaces.

In an aspect, the main body has a planar conformation.

In an aspect, the plan area of the main body is greater than twice, preferably three times, the plan area of the anchoring body. In an aspect, the main body and/or anchoring body have constant respective thickness, preferably the same thickness, preferably included between 1 mm and 10 mm.

In an aspect, the anchoring body has a longitudinal extension direction extending from said constrained end to said free end and orthogonally intersecting the series of folding lines.

In an aspect, the anchoring body and main body have a respective longitudinal size, parallel to said longitudinal extension direction, and a respective transverse size, orthogonal to said longitudinal extension direction.

In an aspect, the longitudinal size and/or lateral size of the main body is at least twice, preferably three times, the transverse size of the anchoring body.

In an aspect, the main body surrounds the anchoring body at least on two sides, preferably at least on three sides. In this manner, in case of fall, the stress received by the second portion of the main body is evenly transmitted to the main body itself preventing the fastening members from being damaged.

In an aspect, the anchoring body is disposed in the middle position of the transverse dimension of the main body, so as to avoid twisting moments on the main body or reduce them.

In an aspect, the main body is of concave polygonal shape with hollow concavity, and said constrained end of the anchoring body is contained in said concavity. In an aspect the main body forms a substantially plate-like unique body with the anchoring body. In an aspect, said anchoring body is of convex polygonal shape (of rectangular shape, for example).

In an aspect, the supporting device comprises coupling members structured for allowing anchoring of a connection cable of a safety line to the device itself.

In an aspect, the free end of the anchoring body comprises a through hole.

In an aspect, said coupling members comprise a pin inserted in said through hole and a ball joint (a ball bearing for example or a ball-and-socket joint, of known type, for example) associated with said pin and intended to be fixed to an end of the connection cable. In this way, since the end of the connection cable can rotate inside the ball joint, the connection cable, due to side and vertical displacements, is able to move and adjust its position relative to the device, under any operating condition of the safety line and in particular in case of fall of an operator. In this manner, misalignments between the connection cable and anchoring body, said longitudinal extension direction for example, are prevented from creating too many stresses inside the device, in particular the anchoring body, which can cause the undesirable deformation of the device itself.

In an aspect, the supporting device comprises fastening members for rigidly fixing the device to the building structure. In an aspect, the main body has a plurality of through holes, preferably disposed in a plurality of parallel rows.

In an aspect, said fastening members comprise a plurality of self-tapping (or thread-forming) screws structured in such a manner that each of them enters a respective hole of said main body and forms a respective hole in said building structure (for instance, in the covering element of sheet metal of said building structure) and rigidly fixes the position of the main body in contact with the building structure.

In an aspect, the fastening members comprise at least one assembling bar the shape of which matches that of a surface portion of the building structure and is interposed between the supporting device and the building structure itself, in such a manner that the self-tapping screws pass therethrough, and make the main body integral with the assembling bar and the surface portion of the building structure.

Preferably, said main body and/or anchoring body and/or assembling bar are made of metal material, steel for example, and preferably zinc-plated steel.

In an aspect, at least said first and last sub-portions of the anchoring body comprise a respective through slot. Preferably, all sub-portions of the anchoring body comprise a respective through slot, preferably all slots being aligned.

In an aspect, the invention relates to an assembly comprising a supporting device according to the present invention, and a locking device configured for mechanically constraining the first and last sub-portions so as to resist said tensile force at least up to a value greater than or equal to 3 kN and to prevent the plastic deformation of the anchoring body.

In an aspect, the locking device comprises a locking pin, a bolt or threaded post for example, such structured that it can enter the through slots of the first and last sub-portion (preferably all sub-portions), and one or more nuts to be screwed down on the bolt or post, respectively.

The building structure of the present invention, provided with the aforesaid safety line, typically is a roof or a roof covering element, a flat, undulated, fretted or crimped covering element, made of sheet metal, cement, wood, plastic or insulating material, for example.

A possible method of manufacturing a supporting device according to the present invention comprises the steps of:
- providing a flat plate;
- cutting, for example by laser cutting, said flat plate at least along one cutting line so as to separate said anchoring body from said main body, along said cutting line;
- bending said anchoring body along said folding lines.

In this manner, the supporting device used in the present invention can be obtained in a simple and cheap manner. In addition, this method is highly repeatable and advantageously can be automated.

The cutting step can comprise the step of carrying out cuts along two cutting lines, preferably parallel to each other, and extending from a perimetral edge of the flat plate preferably until beyond half the longitudinal length of the plate.

In said cutting step, said cutting line can be a path of travel fully inside the flat plate (i.e. it does not intersect the plate perimeter), so as to obtain an anchoring body internal to the main body and surrounded by it preferably on four sides.

In an aspect, said flat plate is of rectangular shape.

In an aspect, said manufacturing method of a supporting device comprises, preferably in the step of cutting said flat plate, the step of making one or more relief openings at the ends of said cutting line, by forming notches or by punching, for example. In this way, it is possible to distribute the tensile force transmitted from the anchoring body to the main body, in particular in case of fall, at the constrained end and prevent this tensile force from being discharged on a single point at the end of the cutting line. This advantageously avoids formation of cracks between the main body and the anchoring body, which cracks are potentially dangerous for the integrity of the supporting device.

Further features and advantages will become more apparent from the detailed description of some embodiments, one of which is the preferred one, given by way of non-limiting example, of a supporting device for safety lines in accordance with the present invention. This description will be set out hereinafter with reference to the accompanying drawings, given by way of non-limiting example, in which:

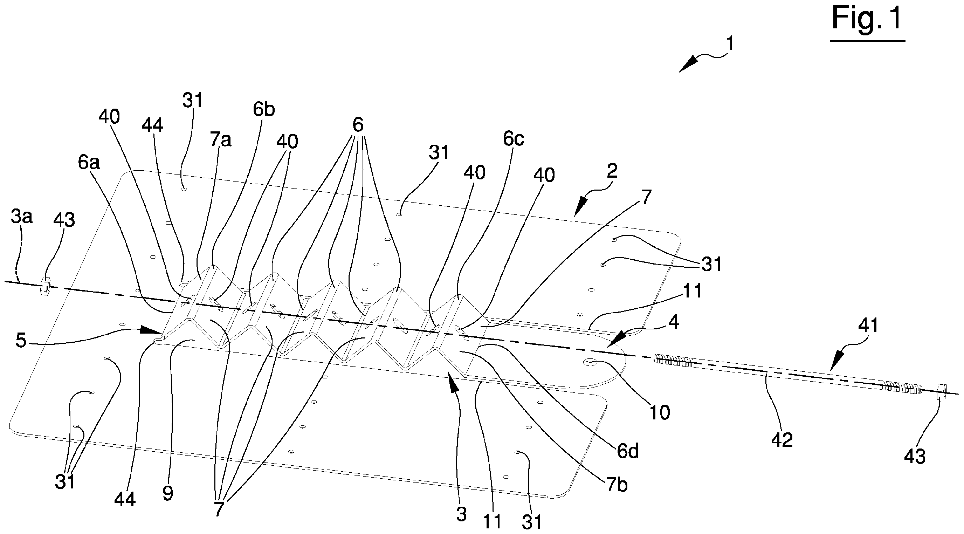

- Fig. 1 is a perspective and partly exploded view of a supporting device for safety lines in accordance with the present invention;

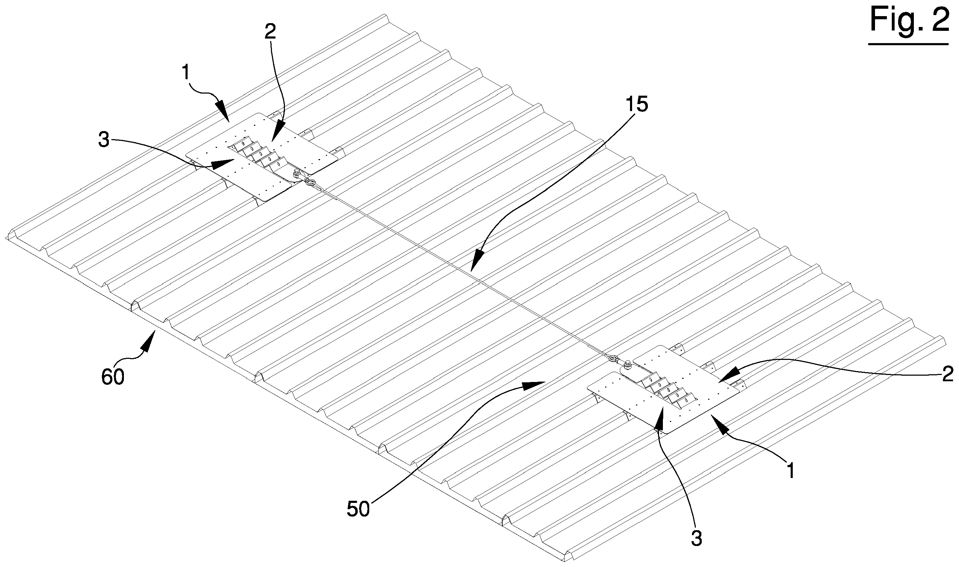

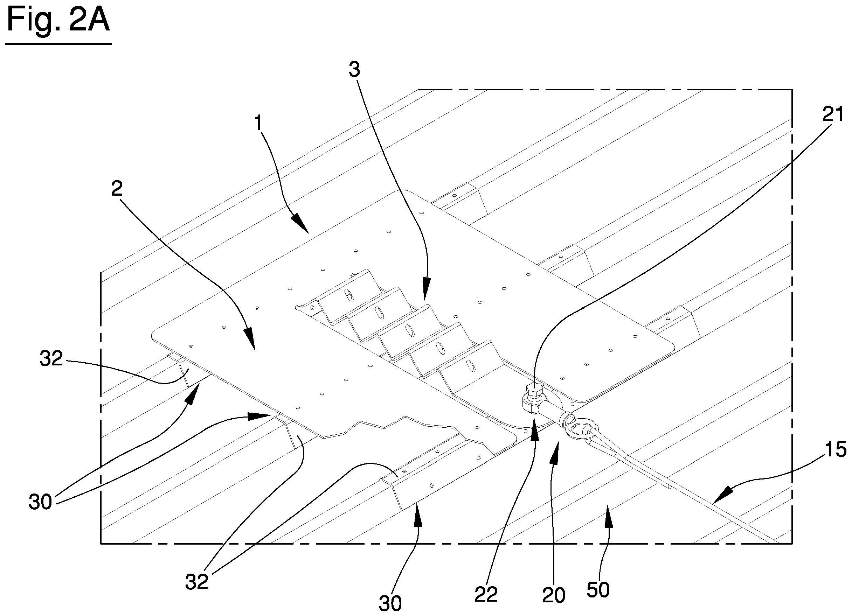

- Fig. 2 is a diagrammatic perspective view of a safety line in accordance with the present invention, installed on a covering element of a building structure and comprising two devices seen in Fig. 1;
- Fig. 2A shows a detail of Fig. 2, with some parts in split.

With reference to the drawings, a supporting device for safety lines used in the present invention is generally identified with reference numeral 1 and a safety line according to the present invention is generally denoted at 50. In general, the same reference numerals are used for the same elements, possibly in their variants.

The safety line comprises two supporting devices 1, fastened at mutually spaced apart positions to a fixed building structure 60, and a connection cable 15 fastened to said two supporting devices. By way of example, the building structure is a covering element of a shed's roof, a fretted covering element for example, made of sheet metal.

Optionally, in order to improve the shock-absorbing capacity, the safety line may further comprise at least one damping device (not shown), comprising a spring for example, interposed in series between the connection cable and a supporting device. Supporting device 1 comprises a main body 2 having a plate-like (preferably flat) conformation, and an anchoring body 3 having a plate-like conformation and provided with a free end 4 and a constrained end 5 opposite to the free end and integrally fixed to the main body. Preferably, the plan area of the main body 2 is four times as big as the plan area of the anchoring body 3. The anchoring body has a series of folding lines 6 interposed between the free and constrained ends, and each pair of adjacent folding lines delimits a respective sub-portion 7 of the anchoring body, so as to define a series of sub-portions each of them lying in an oblique plane relative to the lying plane of the adjacent sub-portions. The anchoring body is such structured that it becomes deformed at least at the folding lines 6, due to a tensile force applied to the free end 4 in such a manner that the free end modifies its position relative to the constrained end 5.

By way of example, the deformation remains elastic at least up to a value of the tensile force included between about 2.5 kN and 4 kN, above which the deformation becomes plastic (or inelastic).

Preferably, as shown by way of example in the figures, the anchoring body is folded down in such a manner that the series of sub-portions has a "sawtooth" conformation, for example the even sub-portions lying in respective planes parallel to each other and the odd sub-portions lying in respective planes parallel to each other. For instance, the series of folding lines comprises eleven folding lines.

In an alternative aspect, not shown, the anchoring body is such folded down that the series of sub-portions takes a substantially sinusoidal wave conformation, i.e. the anchoring body is folded without interruption. In this case the folding lines constitute a continuous long anchoring body.

Preferably the angle formed between two adjacent sub-portions is constant and equal to about 90°.

Preferably, the series of sub-portions comprises a first sub-portion 7a, included between the first 6a and second 6b folding lines, and a last sub-portion 7b included between the penultimate 6c and last 6d folding lines. Preferably the first folding line is coincident with said constrained end 5. Preferably, the constrained end comprises two relief openings 44 (for example of circular shape) on opposite sides.

Preferably, the main body identifies two opposite half-spaces relative thereto and both comprising the main body itself, and the anchoring body extends in one alone of said half-spaces. Preferably, the anchoring body extends in height, between 0 mm and 100 mm, preferably 80 mm, more preferably 60 mm, from the main body. By way of example, the anchoring body extends from the level of the main body about 50 cm in height from the main body.

Preferably, all sub-portions, except for the first sub-portion, extend starting from a minimum height of 10 mm, preferably 20 mm, from the main body. In this way the anchoring body is raised relative to the main body and does not interfere with the covering element of the building structure and/or the assembling bars and/or the fastening members during every operating condition of the safety line. Preferably, the free end 4 of the anchoring body has an end edge 4a. Preferably, the end edge 4a is substantially flush with the main body, in particular it is coplanar with the first folding line. In an alternative aspect, not shown, the end edge is to a different level from the level of the main body, in particular to a different level from the first folding line, and is coincident with said last folding line. For instance, the end edge can be to a level of about 20 mm from the level of the main body, so as to avoid interferences between the free end, the connection cable or the anchoring means and the covering element of the building structure.

The main body can have conformation different from the flat one, so that it may conform to the shape of the building structure.

The main body and anchoring body have a constant thickness, for instance of about 3 mm. Typically, the anchoring body has a longitudinal extension direction 3a oriented from said constrained end to said free end and orthogonally intersecting the series of folding lines. Preferably, the folding lines are straight, preferably of same length.

Preferably, the main body surrounds the anchoring body on three sides, said anchoring body being disposed in the middle position of the transverse dimension of the main body.

Alternatively (not shown), the main body surrounds the anchoring body on four sides, said anchoring body being disposed in the middle position of the main body.

Preferably, the main body is of concave polygonal shape and has a hollow concavity 9, said constrained end of the anchoring body being contained in said concavity. The free end of the anchoring body preferably comprises a through hole 10. The supporting device preferably comprises coupling members 20 such structured as to enable anchoring of a connection cable of a safety line to the device itself.

The coupling members comprise a pin 21 fitted in the through hole and a ball joint 22 (a ball bearing or a ball-and-socket joint of known type, for example) associated with said pin and secured to an end of the connection cable.

Typically, the supporting device, in use, comprises fastening members 30 for rigidly fastening the device to the building structure. The main body has a plurality of through holes 31, preferably disposed along a plurality of parallel rows.

Preferably the fastening members comprise a plurality of self-tapping screws (not shown) structured in such a manner that each of them is fitted in a respective hole of said main body and makes a respective hole in said building structure (in the covering element of sheet metal of said building structure, for example), rigidly fastening the position of the main body in contact with the building structure.

In an aspect, the fastening members comprise at least one assembling bar 32 conforming in shape to a surface portion of the building structure and interposed between the supporting device and the building structure itself, in such a manner that said self-tapping screws pass therethrough and make the main body, assembling bar and surface portion of the building structure integral with each other. Preferably, the assembling bars are fastened to the surface portion of the building structure by means of (self-tapping) screws passing through a side surface of the bar itself.

Preferably, the assembling bar has an inner surface designed to correspond to a respective surface portion of the building structure and the preferably flat upper surface designed to contact said main body. In this way it is possible to obtain a steady and easy assembling of the device on building structures having an unflat surface. In addition, by modifying the assembling bar, the device can be installed on building structures having different surfaces.

When the building structure is a fretted sheet metal comprising a plurality of surface portions that are raised relative to a bottom surface, the assembling members can comprise several assembling bars (three, for example), each of them conforming in shape to a respective surface portion, and the plurality of self-tapping screws is disposed in several rows (three, by way of example), each row being in register with a respective assembling bar.

Preferably, the supporting device is mounted on the building structure in such a manner that the longitudinal extension direction of the anchoring body is orthogonal to said assembling bars.

Preferably, at least said first and last sub-portions of the anchoring body comprise a respective through slot 40. Preferably, all sub-portions of the anchoring body comprise a respective through slot 40, preferably all slots being aligned.

Preferably, a locking device 41 is configured for mechanically constraining the first and last sub-portions so that they resist the tensile force up to at least one value equal to 5 kN and prevent plastic deformation of the anchoring body.

Preferably, the locking device comprises a locking pin 42, a threaded post for example, such structured that it enters the through slots of all sub-portions, and two nuts 43 to be screwed on the post.

Alternatively, the locking device comprises a stiff rod (not shown) having two clamps at the ends thereof, which clamps are designed to be removably hooked to the first and last sub-portions, respectively.

Preferably, the main body forms a substantially plate-like unique body with the anchoring body. In this case the manufacturing method of the supporting device can advantageously comprise the steps of: providing a rectangular (or square) flat plate; cutting, by laser cutting for example, the flat plate along a pair of parallel cutting lines 11 the length of which is about three-quarters the longitudinal length of the plate, so as to separate the anchoring body from the main body along said cutting lines; folding the anchoring body along the folding lines.

## Claims

1. A method of performing a static test on a safety line, the method comprising the steps of:
a) mounting on a building structure (60) a safety line (50) comprising a first and a second supporting device (1) spaced between them and a connection cable (15) connecting said two supporting devices (1), at least the first of said supporting devices (1) having a main body (2) stiffly fixed to the building structure and an anchoring body (3) provided with a constrained end (5) integrally fixed to the main body (2) and a free end (4) opposite to said constrained end (5), the free end (4) being bound to said connection cable (15), wherein the anchoring body (3) has at least a first (7a) and a last sub-portion (7b) said method being **characterized in that** said anchoring body (3) of step a) is structured for plastically deforming due to a tensile force greater than 2 kN applied to said free end (4), so that the last sub-portion (7b) plastically changes its position with respect to the first one (7a);
b) mechanically constraining the first (7a) and last sub-portion (7b) of said first supporting device (1) so as to prevent the last sub-portion (7b) from plastically changing its position with respect to the first (7a) when a tensile force greater than or equal to 3 kN, preferably greater than or equal to 4 kN, is applied to said free end (4);
c) after step b), applying to the connection cable (15) a tensile force greater than or equal to 3 kN for a determined period of time, said tensile force having a value that does not cause a plastic deformation of the mechanically constrained anchoring body (3) of the first supporting device (1) of step b);
d) after step c), reducing said tensile force to a value less than or, preferably, equal to 2 kN;
e) after step d), releasing said first (7a) and last (7b) sub-portions of said anchoring body (3) of the first supporting device (1) from said mechanical constrain of step b) so as to allow the aforesaid plastic deformation.

2. The method according to the preceding claim, wherein in step c) said determined tensile force is greater than or equal to 4kN, preferably greater than or equal to 5kN.

3. The method according to claim 1 or 2, wherein in step c) said determined period of time is greater than 1 minute, preferably greater than or equal to 2 minutes, preferably greater than or equal to 3 minutes.

4. The method according to any one of the preceding claims, wherein in the first or both of said supporting devices (1) the main body (2) has a substantially plate-like conformation and said anchoring body (3) has a substantially plate-like conformation.

5. The method according to any one of the preceding claims, wherein in the first or both of said supporting devices (1) the anchoring body (3) has a series of folding lines (6) interposed between said free end (4) and constrained end (5), each pair of adjacent folding lines delimiting a respective sub-portion (7) of the anchoring body so as to define a series of sub-portions, comprising said first and last sub-portions, each sub-portion lying in a plane oblique with respect to the lying plane of the adjacent sub-portions; wherein said plastic deformation occurs at least in correspondence of said folding lines so that the free end changes its position with respect to the constrained end.

6. The method according to claim 5, wherein in the first or both of said supporting devices said series of folding lines comprises at least five folding lines and the series of sub-portions (7) defines a series of angles between each pair of adjacent sub-portions, each of said angles being on a face of the anchoring body opposite to the face on which the adjacent angles are, and wherein, in the first or both of said supporting devices, the angle formed between at least five pairs of adjacent sub-portions is less than or equal to 135°, preferably less than or equal to 110°, still more preferably equal to 90°.

7. The method according to any one of the preceding claims, wherein in step a) the anchoring of the connection cable (15) to the supporting device takes place by means of coupling members (20), the free end of the anchoring body comprising a through hole, wherein said coupling members comprising a pin (21) inserted in said through hole (10) and a ball joint (22) associated with said pin and fixed to an end of the connection cable and the supporting device is fixed to the building structure by means of fastening members, the main body having a plurality of through holes, wherein said fastening members comprise a plurality of self-tapping screws each inserted in a respective hole of said main body and making a respective hole in said building structure for rigidly fixing the position of the main body in contact with the building structure.

8. The method according to any one of the preceding claims, wherein in step b) the first and last sub-portions of said first supporting device are mechanically constrained by means of a locking pin (41) inserted at least in respective through slots of the first and last sub-portions, and by means of at least one nut screwed onto the locking pin.

9. The method according to claim 8, wherein in step b) the first and last sub-portions of said first supporting device are mechanically constrained by means of the locking pin inserted in respective through slots of all the sub-portions, and by means of the at least one nut screwed onto the locking pin.

10. The method according to any one of the preceding claims, wherein the second supporting device has the same features claimed for the first supporting device and wherein the steps b) and e) are performed on both the supporting devices.

## Patentansprüche

1. Verfahren zum Durchführen eines statischen Tests an einer Sicherheitsleine, wobei das Verfahren die folgenden Schritte umfasst:
a) Anbringen einer Sicherheitsleine (50) an einer Gebäudekonstruktion (60), umfassend eine erste und eine zweite Halterungsvorrichtung (1), die voneinander beabstandet sind, und ein Verbindungskabel (15), das die zwei Halterungsvorrichtungen (1) miteinander verbindet, wobei mindestens die erste dieser Halterungsvorrichtungen (1) einen Hauptkörper (2) aufweist, der steif an der Gebäudekonstruktion fixiert ist, und einen Verankerungskörper (3), der mit einem fest verbundenen Ende (5) versehen ist, das vollständig am Hauptkörper (2) fixiert ist, und einem freien Ende (4), das gegenständig zum fest verbundenen Ende (5) angeordnet ist, wobei das freie Ende (4) am Verbindungskabel (15) festgeklemmt ist, wobei der Verankerungskörper (3) mindestens einen ersten (7a) und einen letzten Unterabschnitt (7b) aufweist, wobei das Verfahren **dadurch gekennzeichnet ist, dass** der Verankerungskörper (3) aus Schritt a) aufgebaut ist, um sich aufgrund einer Zugkraft plastisch zu verformen, die größer als 2 kN ist und auf das freie Ende (4) angewandt wird, sodass der letzte Unterabschnitt (7b) seine Position zum ersten (7a) plastisch verändert;
b) mechanisches festes Verbinden des ersten (7a) und des letzten Unterabschnitts (7b) der ersten Halterungsvorrichtung (1), sodass verhindert wird, dass der letzte Unterabschnitt (7b) plastisch seine Position zum ersten (7a) verändert, wenn eine Zugkraft größer oder gleich 3 kN, vorzugsweise größer oder gleich 4 kN, auf das freie Ende (4) angewandt wird;
c) nach Schritt b) Anwenden einer Zugkraft, die größer oder gleich 3 kN ist, auf das Verbindungskabel (15) für einen vorgegebenen Zeitraum, wobei die Zugkraft einen Wert hat, der keine plastische Verformung des mechanisch fest verbundenen Verankerungskörpers (3) der ersten Halterungsvorrichtung (1) aus Schritt b) hervorruft;
d) nach Schritt c) Reduzieren der Zugkraft auf einen Wert kleiner oder vorzugsweise gleich 2 kN;
e) nach Schritt d) Freigeben des ersten (7a) und letzten (7b) Unterabschnitts des Verankerungskörpers (3) der ersten Halterungsvorrichtung (1) aus der festen mechanischen Verbindung aus Schritt b), sodass die oben genannte plastische Verformung erlaubt wird.

2. Verfahren nach dem vorhergehenden Anspruch, wobei die vorgegebene Zugkraft in Schritt c) größer oder gleich als 4 kN ist, vorzugsweise größer oder gleich 5 kN.

3. Verfahren nach Anspruch 1 oder 2, wobei der vorgegebene Zeitraum in Schritt c) größer ist als 1 Minute, vorzugsweise größer oder gleich 2 Minuten, vorzugsweise größer oder gleich 3 Minuten.

4. Verfahren nach einem der vorhergehenden Ansprüche, wobei der Hauptkörper (2) bei der ersten oder beiden der Halterungsvorrichtungen (1) eine im Wesentlichen plattenähnliche Beschaffenheit aufweist und der Verankerungskörper (3) eine im Wesentlichen plattenähnliche Beschaffenheit aufweist.

5. Verfahren nach einem der vorhergehenden Ansprüche, wobei der Verankerungskörper (3) bei der ersten oder beiden Halterungsvorrichtungen (1) eine Reihe an Faltlinien (6) aufweist, die zwischen dem freien Ende (4) und dem fest verbundene Ende (5) eingesetzt sind, wobei ein jedes Paar angrenzender Faltlinien einen jeweiligen Unterabschnitt (7) des Verankerungskörpers begrenzt, sodass eine Reihe von Unterabschnitten definiert wird, umfassend den ersten und letzten Unterabschnitt, wobei ein jeder Unterabschnitt in einer Ebene liegt, die schräg zur Liegeebene der angrenzenden Unterabschnitte verläuft, wobei die plastische Verformung mindestens an den Faltlinien stattfindet, sodass die freien Enden ihre Position zum fest verbundenen Ende ändern.

6. Verfahren nach Anspruch 5, wobei die Reihe an Faltlinien bei der ersten oder beiden Halterungsvorrichtungen mindestens fünf Faltlinien umfasst und die Reihe an Unterabschnitten (7) eine Reihe an Winkeln zwischen einem jeden Paar angrenzender Unterabschnitte definiert, wobei sich ein jeder der Winkel auf einer Seite des Verankerungskörpers befindet, die der Seite gegenüberliegend angeordnet ist, auf der sich die angrenzenden Winkel befinden, und wobei bei der ersten oder beiden der Halterungsvorrichtungen der Winkel, der zwischen mindestens fünf Paaren angrenzenden Unterabschnitten gebildet ist, kleiner oder gleich 135° ist, vorzugsweise kleiner oder gleich 110° und noch besser gleich 90°.

7. Verfahren nach einem der vorhergehenden Ansprüche, wobei die Verankerung des Verbindungskabels (15) an der Halterungsvorrichtung in Schritt a) mittels Kupplungselementen (20) stattfindet, wobei das freie Ende des Verankerungskörpers ein Durchführungsloch umfasst, wobei die Kupplungselemente einen Stift (21) umfassen, der in das Durchführungsloch (10) eingesetzt ist, und ein Kugelgelenk (22), das mit dem Stift assoziiert und an einem Ende des Verbindungskabels fixiert ist, und die Halterungsvorrichtung an der Gebäudekonstruktion mittels Befestigungselementen fixiert ist, wobei der Hauptkörper eine Vielzahl an Durchführungslöchern aufweist, wobei die Befestigungselemente eine Vielzahl an selbstschneidenden Schrauben umfassen, von denen eine jede in ein entsprechendes Loch des Hauptkörpers eingefügt ist und ein entsprechendes Loch in der Gebäudekonstruktion ausbildet, um die Position des Hauptkörpers in Kontakt mit der Gebäudekonstruktion steif zu fixieren.

8. Verfahren nach einem der vorhergehenden Ansprüche, wobei der erste und der letzte Unterabschnitt der ersten Halterungsvorrichtung in Schritt b) mittels eines Verriegelungsstifts (41), der mindestens in jeweilige Durchführungsschlitze des ersten und letzten Unterabschnitts eingefügt ist, sowie mittels mindestens einer Mutter, die auf dem Verriegelungsstift aufgeschraubt ist, mechanisch fest verbunden sind.

9. Verfahren nach Anspruch 8, wobei der erste und der letzte Unterabschnitt der ersten Halterungsvorrichtung in Schritt b) mittels des Verriegelungsstifts, der in jeweilige Durchführungsschlitze aller Unterabschnitts eingefügt ist, sowie mittels der mindestens einen Mutter, die auf dem Verriegelungsstift aufgeschraubt ist, mechanisch fest verbunden sind.

10. Verfahren nach einem der vorhergehenden Ansprüche, wobei die zweite Halterungsvorrichtung dieselben Merkmalen aufweist, die für die erste Halterungsvorrichtung beansprucht wurden, und wobei die Schritte b) und e) auf beiden Halterungsvorrichtungen durchgeführt werden.

## Revendications

1. Procédé permettant d'effectuer un essai statique sur une ligne de vie, le procédé comprenant les étapes de :
a) monter sur une structure de bâtiment (60) une ligne de vie (50) comprenant un premier et un second dispositif de support (1) espacés entre eux et un câble de raccordement (15) raccordant lesdits deux dispositifs de support (1), au moins le premier desdits dispositifs de support (1) comportant un corps principal (2) fixé fermement à la structure de bâtiment et un corps d'ancrage (3) pourvu d'une extrémité solidaire (5) fixée de façon solidaire au corps principal (2) et une extrémité libre (4) opposée à ladite extrémité solidaire (5), l'extrémité libre (4) étant reliée au dit câble de raccordement (15), dans lequel le corps d'ancrage (3) comporte au moins une première (7a) et une dernière sous-partie (7b), ledit procédé étant **caractérisé en ce que** ledit corps d'ancrage (3) de l'étape a) est structuré pour se déformer plastiquement en raison d'une force de traction supérieure à 2 kN appliquée à ladite extrémité libre (4) de sorte que la dernière sous-partie (7b) modifie plastiquement sa position par rapport à la première (7a) ;
b) contraindre mécaniquement la première (7a) et la dernière sous-partie (7b) dudit premier dispositif de support (1) de sorte à empêcher que la dernière sous-partie (7b) ne modifie plastiquement sa position par rapport à la première (7a) lorsqu'une force de traction, supérieure ou égale à 3 kN, de préférence supérieure ou égale à 4 kN, est appliquée à ladite extrémité libre (4) ;
c) après l'étape b), appliquer au câble de raccordement (15) une force de traction supérieure ou égale à 3 kN pendant une période temps déterminée, ladite force de traction ayant une valeur ne provoquant pas une déformation plastique du corps d'ancrage (3) contraint mécaniquement du premier dispositif de support (1) de l'étape b) ;
d) après l'étape c), réduire ladite force de traction à une valeur inférieure à, ou de préférence, égale à 2 kN ;
e) après l'étape d), libérer lesdites première (7a) et dernière (7b) sous-parties dudit corps d'ancrage (3) du premier dispositif de support (1) de ladite contrainte mécanique de l'étape b) de sorte à permettre la susdite déformation plastique.

2. Procédé selon la revendication précédente, dans lequel à l'étape c), ladite force de traction déterminée est supérieure ou égale à 4 kN, de préférence supérieure ou égale à 5 kN.

3. Procédé selon la revendication 1 ou 2, dans lequel à l'étape c), ladite période de temps déterminée est supérieure à 1 minute, de préférence supérieure ou égale à 2 minutes, de préférence supérieure ou égale à 3 minutes.

4. Procédé selon l'une quelconque des revendications précédentes, dans lequel dans le premier ou deux desdits dispositifs de support (1), le corps principal (2) possède une forme substantiellement en plaque et ledit corps d'ancrage (3) possède une forme substantiellement en plaque.

5. Procédé selon l'une quelconque des revendications précédentes, dans lequel dans le premier ou deux desdits dispositifs de support (1), le corps d'ancrage (3) comporte une série de lignes de pliage (6) interposées entre ladite extrémité libre (4) et l'extrémité solidaire (5), chaque paire de lignes de pliage adjacentes délimitant une sous-partie respective (7) du corps d'ancrage de manière à définir une série de sous-parties comprenant lesdites première et dernière sous-parties, chaque sous-partie reposant dans un plan oblique par rapport au plan d'appui des sous-parties adjacentes ; dans lequel ladite déformation plastique se déroule au moins en correspondance desdites lignes de pliage de manière à ce que l'extrémité libre modifie sa position par rapport à l'extrémité solidaire.

6. Procédé selon la revendication 5, dans lequel dans le premier ou deux desdits dispositifs de support, ladite série de lignes de pliage comprend au moins cinq lignes de pliage et la série de sous-parties (7) définit une série d'angles entre chaque paire de sous-parties adjacentes, chacun desdits angles étant sur une face du corps d'ancrage opposée à la face sur laquelle les angles adjacents se trouvent, et dans lequel, dans le premier ou deux desdits dispositifs de support, l'angle formé entre au moins cinq paires de sous-parties adjacentes est inférieur ou égal à 135°, de préférence inférieur ou égal à 110°, idéalement égal à 90°.

7. Procédé selon l'une quelconque des revendications précédentes, dans lequel à l'étape a), l'ancrage du câble de raccordement (15) au dispositif de support se déroule au moyen d'organes d'accouplement (20), l'extrémité libre du corps d'ancrage comprenant un trou passant, dans lequel lesdits organes d'accouplement, comprenant une cheville (21) insérée dans ledit trou passant (10) et un joint à rotule (22) associé à ladite cheville et fixé à une extrémité du câble de raccordement et du dispositif de support, sont fixés à la structure de bâtiment au moyen d'organes de fixation, le corps principal comportant une pluralité de trous passants, dans lequel lesdits organes de fixation comprennent une pluralité de vis autotaraudeuses, chacune insérée dans un trou respectif dudit corps principal et faisant un trou respectif dans ladite structure de bâtiment pour fixer rigidement la position du corps principal en contact avec la structure de bâtiment.

8. Procédé selon l'une quelconque des revendications précédentes, dans lequel à l'étape b), les première et dernière sous-parties dudit premier dispositif de support sont mécaniquement contraintes au moyen d'une tige de blocage (41) insérée au moins dans des fentes passantes respectives des première et dernière sous-parties, et au moyen d'au moins un écrou vissé sur la tige de blocage.

9. Procédé selon la revendication 8, dans lequel à l'étape b), les première et dernière sous-parties dudit premier dispositif de support sont mécaniquement contraintes au moyen de la tige de blocage insérée dans des fentes passantes respectives de toutes les sous-parties, et au moyen de l'au moins un écrou vissé sur la tige de blocage.

10. Procédé selon l'une quelconque des revendications précédentes, dans lequel le second dispositif de support comporte les mêmes caractéristiques revendiquées pour le premier dispositif de support et dans lequel les étapes b) et e) sont effectuées sur les deux dispositifs de support.
